# EUROPEAN PATENT APPLICATION

(11) **EP 4 807 632 A1**
(43) Date of publication of application: **16.09.2026**
(21) Application number: 25382237.3
(22) Date of filing: 14.03.2025
(51) Int. Cl.: G06N 10/20, G06N 5/01, G06N 3/126, G06N 10/40, G06N 10/60

(54) **METHODS AND SYSTEMS FOR PERFORMING AUTOMATIC GATE-CUTTING OF QUANTUM CIRCUITS**

(71) Applicant: Fujitsu Limited, Kawasaki-shi, Kanagawa 211-8588 (JP)
(72) Inventor: Perez Soloviev, Vicente, Madrid (ES); Marquez Romero, Antonio, Castelldefels (ES); Kirsopp, Josh, Halifax (GB); Krompiec, Michal P., Cambridge (GB)
(74) Representative: Haseltine Lake Kempner LLP

(57) **Abstract**

A computer-implemented method is provided for performing automatic gate-cutting of a target quantum circuit into a set of output subcircuits, comprising: identifying a target quantum circuit comprising a number of qubits and entanglement gates; identifying a subcircuit constraint defining the maximum number of qubits available per output subcircuit of the set of output subcircuits; performing a cutting algorithm to determine a set of optimum subcircuits, the cutting optimisation algorithm comprising: iteratively evaluating a cost function which determines candidate sets of subcircuits based on an assessment of the entanglement gates of the target quantum circuit, comprising determining for each candidate set of subcircuits: whether the subcircuit constraint is satisfied; and a subset of the entanglement gates to be cut to achieve the candidate set of subcircuits; minimising the cost function and defining the set of optimum subcircuits as the respective candidate set of subcircuits for which the cost function is minimised; creating the set of output subcircuits, comprising cutting each of the entanglement gates of the respective subset of the entanglement gates to be cut to achieve the set of optimum subcircuits.

## Description

### Field of the Invention

The present invention relates to methods and systems for automatic gate-cutting in quantum circuits, and particularly to providing automatic determination of optimum gate-cutting for specific contexts.

### Background of the Invention

One of the significant limitations for quantum circuit simulation in the state of the art is the limited number of qubits available in current quantum devices. To attempt to avoid this problem it is known to provide powerful quantum simulators on classical devices. However, due to the high complexity and computing power needed to implement these simulations, the number of simulated qubits available in these systems is still very limited and not sufficient to approach realistic, industry-engaging, problems.

Alternatively, when using quantum device hardware, the approach of circuit cutting has been proposed. Circuit cutting allows for splitting the original quantum circuit into separate subcircuits each having smaller numbers of qubits, which can thereby be processed with smaller quantum computers such as those available today.

Circuit cutting comes in a number of forms. However, there are broadly two different approaches: wire cutting and gate cutting. Wire cutting involves splitting the original quantum circuit system into subcircuits by performing cuts in the wires of the circuit. Each wire cut is reflected as a measurement in first subcircuit, and a state preparation in the second subcircuit. Hence wire cutting may be said to move the information of one wire into a different wire. This way, it is possible to split a quantum circuit into subcircuits by preparing the state of a wire onto a different wire. Alternatively, gate cutting involves decomposing an entanglement gate into a set of experiments composed by single-qubit gates and a post processing step. Accordingly, gate cutting is based on replicating the performance of a given quantum gate by simulating several smaller experiments and reconstructing its results.

However, searching for the optimal cut in the original quantum circuit in order to determine the subcircuits is a complex classical optimization task involving many calculations requiring significant computational resources and taking long periods of time.

Further, the state of the art largely focuses on wire cutting techniques to find the optimal wire cut.

Hence there is a need for improved methods and systems of performing gate cutting. In particular for methods of fast, efficient and accurate gate cutting of quantum circuits to allow for quantum calculations to be performed in limited qubits scenarios.

Certain aspects of the present disclosure and their embodiments may provide solutions to these or other challenges.

### Statement of the Invention

Aspects of the invention are defined by the accompanying claims. Advantageous optional features are defined in the dependent claims.

According to an aspect there is provided a computer-implemented method of performing automatic gate-cutting of a target quantum circuit into a set of output subcircuits, comprising:
identifying a target quantum circuit comprising a number of qubits and entanglement gates;
identifying a subcircuit constraint defining the maximum number of qubits available per output subcircuit of the set of output subcircuits;
performing a cutting algorithm to determine a set of optimum subcircuits, the cutting optimisation algorithm comprising:
   iteratively evaluating a cost function which determines candidate sets of subcircuits based on an assessment of the entanglement gates of the target quantum circuit, comprising determining for each candidate set of subcircuits:
      whether the subcircuit constraint is satisfied; and
      a subset of the entanglement gates to be cut to achieve the candidate set of subcircuits;
         minimising the cost function and defining the set of optimum subcircuits as the respective candidate set of subcircuits for which the cost function is minimised; and
   creating the set of output subcircuits, comprising cutting each of the entanglement gates of the respective subset of the entanglement gates to be cut to achieve the set of optimum subcircuits.

Various aspects and embodiments of the invention are described without limitation below, with reference to the figures.

### Brief Description of the Drawings

There now follows, by way of example only, a detailed description of preferred embodiments of the present invention, with reference to the figures identified below.
**Figure 1** illustrates a method;
**Figure 2** illustrates a process;
**Figure 3** illustrates method;
**Figure 4** illustrates a process;
**Figure 5** illustrates a process;
**Figure 6** illustrates a visualisation of a specific embodiment of a process;
**Figure 7** illustrates a visualisation of a specific embodiment of a process;
**Figure 8** is a graph of test results;
**Figure 9** is a graph of test results;
**Figure 10** is a graph of test results;
**Figure 11** is a graph of test results;
**Figure 13** illustrates an apparatus;
**Figure 14** illustrates an apparatus.

### Detailed Description

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

Aspects and embodiments may advantageously provide an automatic framework to implement gate cutting over a quantum circuit given by a user. For instance, the given quantum circuit may be one which the user is unable to run on an available quantum device, for instance due to there not being a sufficient number of qubits in the quantum device.

Aspects and embodiments may perform automatic identification and cutting of gates in a target quantum circuit, for instance in an advantageously fast and efficient manner.

Aspects and embodiments may provide an automatic framework to implement gate cutting over a quantum circuit given by a user, in the sense that following the initial user input the framework and method may handle the process entirely without further user input.

Aspects and embodiments may advantageously find, execute and post-process subcircuits created by splitting a particular target quantum circuit.

Aspects and embodiments may advantageously allow a user seeking to solve particular problem or run a particular experiment, to convert the problem into one they are able to execute on the quantum hardware available to them. For instance, a user may have determined a particular quantum circuit specifically tailored to performing a particular experiment or solving a particular problem. However, the number of qubits required by the created quantum circuit may be more than is available in the hardware available to the user, whether this is classical or quantum hardware. Accordingly, aspects and embodiments may advantageously be able to automatically determine a collection of subcircuits, based on the created quantum circuit, which are capable of being run on the hardware available to the user for instance by having a number for qubits less than or equal to the available hardware.

Further to the above, aspects and embodiments may advantageously provide methods and systems for reconstructing the expectation value related to a particular problem the user is trying to solve, rather than the full state vector. In particular, in state of the art methods involving cutting, these typically involve wire cutting, and further involve methods of reconstructing the state vector that would be returned from a classical simulation of the original quantum circuit. However, aspects and embodiments advantageously provide methods of reconstructing the expectation value, widely used in of quantum algorithms. Hence advantageously, aspects and embodiments are much less costly to run in terms of resources, and are much faster and more efficient than reconstructing the full state vector, and can also be advantageously directly applied to a wide range of tasks.

Aspects and embodiments may advantageously provide an automatic cut finder method and system which returns the optimal gate cut to be performed in order to split an original quantum circuit into a set of subcircuits. Aspects and embodiments may advantageously provide an automatic method to generate a set of experiments according to the cuts and subcircuits found.

Aspects and embodiments may advantageously provide an automatic method and system to post process the results from the respective experiments generated, and return the reconstructed result.

Aspects and embodiments may advantageously address the deficiencies in the state of the art which focus on wire cutting, and in which there are few available methods for gate cutting, and in which there are no automatic cut finding methods or algorithms available for gate cutting.

Aspects and embodiments may advantageously provide a general framework for circuit cutting of a quantum circuit in which the gates are cut and the performance of the original quantum circuit is reconstructed by generating several experiments.

Aspects and embodiments may advantageously provide a method and system that receives a general quantum circuit, a backend hardware and a Hamiltonian to be considered, and returns a reconstructed expectation value of the Hamiltonian by using smaller quantum circuits generated by gate cutting the original general quantum circuit.

Aspects and embodiments may advantageously provide a method and system for automatic cut finding that is capable of locating the optimal gates to be cut for a particular quantum circuit and given a particular backend hardware constraint of a particular number of qubits.

Aspects and embodiments may advantageously provide a distributed postprocessing simulation of the experiments required to reconstruct the original quantum circuit functionality, thereby speeding up the computation.

Aspects and embodiments may advantageously provide a method and system capable of allowing bigger scale problems involving many qubits to be broken down and addressed using smaller scale circuits with fewer qubits. In other words, aspects and embodiments may provide methods and systems for allowing problems involving large numbers of qubits to be run on available hardware systems with fewer qubits. Hence aspects and embodiments advantageously provide for the ability to execute bigger quantum circuit instances without scaling the current hardware.

Aspects and embodiments may provide a post-processing method for reconstructing the outcome expected for a given Hamiltonian (provided by the user) from a simulation of the original circuit, by executing a series of subcircuit simulation experiments.

Aspects and embodiments advantageously use gate cutting, which compared to state of the art methods such as wire cutting may provide in the case of reduced entanglement gate overhead the use fewer qubits, making it simple to parallelize.

Aspects of the invention are defined by the accompanying claims. Advantageous optional features are defined in the dependent claims.

According to an aspect there is provided a computer-implemented method of performing automatic gate-cutting of a target quantum circuit into a set of output subcircuits, comprising:
identifying a target quantum circuit comprising a number of qubits and entanglement gates;
identifying a subcircuit constraint defining the maximum number of qubits available per output subcircuit of the set of output subcircuits;
performing a cutting algorithm to determine a set of optimum subcircuits, the cutting optimisation algorithm comprising:
   iteratively evaluating a cost function which determines candidate sets of subcircuits based on an assessment of the entanglement gates of the target quantum circuit, comprising determining for each candidate set of subcircuits:
      whether the subcircuit constraint is satisfied; and
      a subset of the entanglement gates to be cut to achieve the candidate set of subcircuits;
         minimising the cost function and defining the set of optimum subcircuits as the respective candidate set of subcircuits for which the cost function is minimised; and
   creating the set of output subcircuits, comprising cutting each of the entanglement gates of the respective subset of the entanglement gates to be cut to achieve the set of optimum subcircuits.

The cost function may be minimised for the candidate set of subcircuits for which:
the subcircuit constraint is satisfied; and
the number of entanglement gates of the target quantum circuit to be cut in the respective subset of the entanglement dates is a minimum.

The subcircuit constraint may be based on the maximum number of qubits available in a backend system comprising a quantum device or a quantum simulator.

The cutting algorithm may further comprise using an evolutionary algorithm for minimising the cost function.

The target quantum circuit may comprise a predetermined arrangement of gates, including entanglement gates, wires and number qubits to perform a user-defined operation.

The cost function may comprise: $f \left(x\right) = \left\{\begin{matrix}if isvalid \left(x\right) : {\sum }_{i , j}^{i > j} {x}_{ij} {w}_{ij} \\ else : δ\end{matrix}\right.$ wherein:
*xᵢⱼ* = 0 and *xᵢⱼ* = 1 denote respectively that there does not exist and there does exist entanglement gates between qubits *i* and *j* of the target quantum circuit, where *xᵢⱼ* ∈ {0, 1};
*wᵢⱼ* denotes the number of entanglement gates of the target circuit present between qubits *i* and*j*;
*isvalid*(*x*) returns the value 'True' if the subcircuit constraint is satisfied, and 'False' otherwise; and
*δ* is a penalization term.

According to an aspect there is provided a computer-implemented method of determining an expectation value of a Hamiltonian, comprising:
receiving a Hamiltonian to be measured and an associated target quantum circuit;
performing automatic gate-cutting of the target quantum circuit into a set of output subcircuits in accordance with the computer-implemented method of any preceding claim;
generating a set of experiments, based on the set of output subcircuits and the cut entanglement gates;
splitting the Hamiltonian into sub-terms in accordance with the set of output subcircuits and the set of experiments;
measuring, for each sub-term, the expectation value of each experiment of the set of experiments using the set of output subcircuits;
determining the expectation value of the Hamiltonian, comprising combining each expectation value of each experiment for each sub-term.

The target quantum circuit may be configured to prepare a quantum state to measure the expectation value of the Hamiltonian to be measured.

The measuring, for each sub-term, the expectation value of each experiment of the set of experiments may be performed using the backend.

The generating the set of experiments may be performed using Cartan KAK decomposition.

The measuring, for each sub-term, the expectation value of each experiment of the set of experiments may be parallelised such that each of the subcircuits is executed in parallel.

According to an aspect there is provided a computer program which, when run on a hybrid quantum-classical computer, causes the computer to carry out the method of performing automatic gate-cutting of a target quantum circuit into a set of output subcircuits in accordance with any described aspect or embodiment.

According to an aspect, there is provided a computer program which, when run on a hybrid quantum-classical computer, causes the computer to carry out the method of determining an expectation value of a Hamiltonian in accordance with any described aspect or embodiment.

According to an aspect, there is provided an information processing apparatus comprising a memory and a processor connected to the memory, wherein the processor is configured to perform the method of performing automatic gate-cutting of a target quantum circuit into a set of output subcircuits in accordance with any described aspect or embodiment.

According to an aspect, there is provided an information processing apparatus comprising a memory and a processor connected to the memory, wherein the processor is configured to perform the method of determining an expectation value of a Hamiltonian in accordance with any described aspect or embodiment.

According to an aspect there is provided a computer program which, when run on a computer, causes the computer to carry out a method in accordance with any manner described herein.

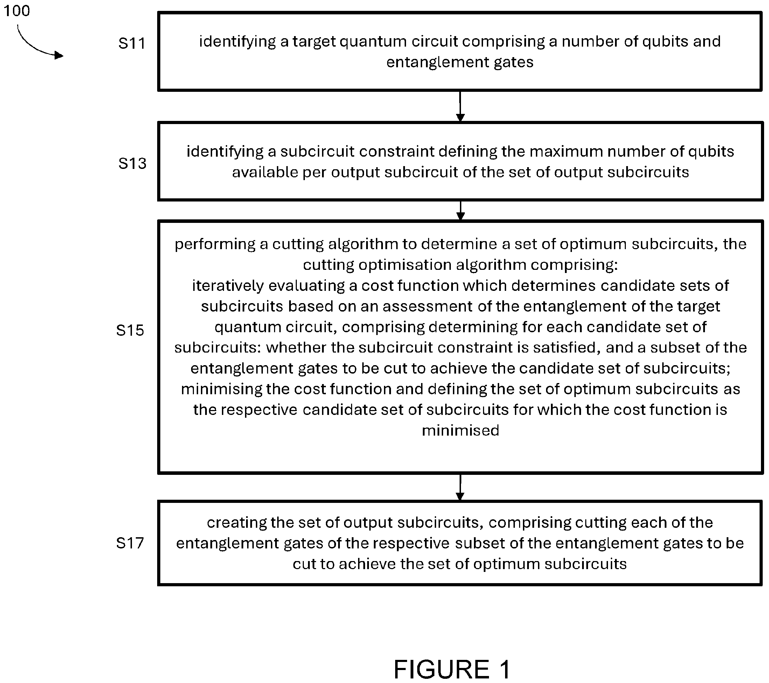

**Figure 1** is a diagram illustrating a method 100 according to an aspect. In particular, the process may be a computer-implemented method of performing automatic gate-cutting of a target quantum circuit into a set of output subcircuits.

Step S11 comprises identifying a target quantum circuit comprising a number of qubits and entanglement gates.

Step S13 comprises identifying a subcircuit constraint defining the maximum number of qubits available per output subcircuit of the set of output subcircuits.

Step S15 comprises performing a cutting algorithm to determine a set of optimum subcircuits. The cutting algorithm comprising iteratively evaluating a cost function which determines candidate sets of subcircuits based on an assessment of the entanglement gates of the target quantum circuit. For each candidate set of subcircuits, it is determined: whether the subcircuit constraint is satisfied, and also determines a subset of the entanglement gates to be cut to achieve the candidate set of subcircuits. The cost function is minimised, and the respective candidate set of subcircuits for which the cost function is minimised is defined as and taken to be the set of optimum subcircuits.

Step S17 comprises creating the set of output subcircuits, comprising cutting each of the entanglement gates of the respective subset of the entanglement gates to be cut to achieve the set of optimum subcircuits.

Advantageously, aspects and embodiments in accordance with method 100 are able to provide a fast, efficient, accurate manner of automatically determining and performing suitable gate-cutting in a particular target quantum circuit to suit a particular hardware constraint.

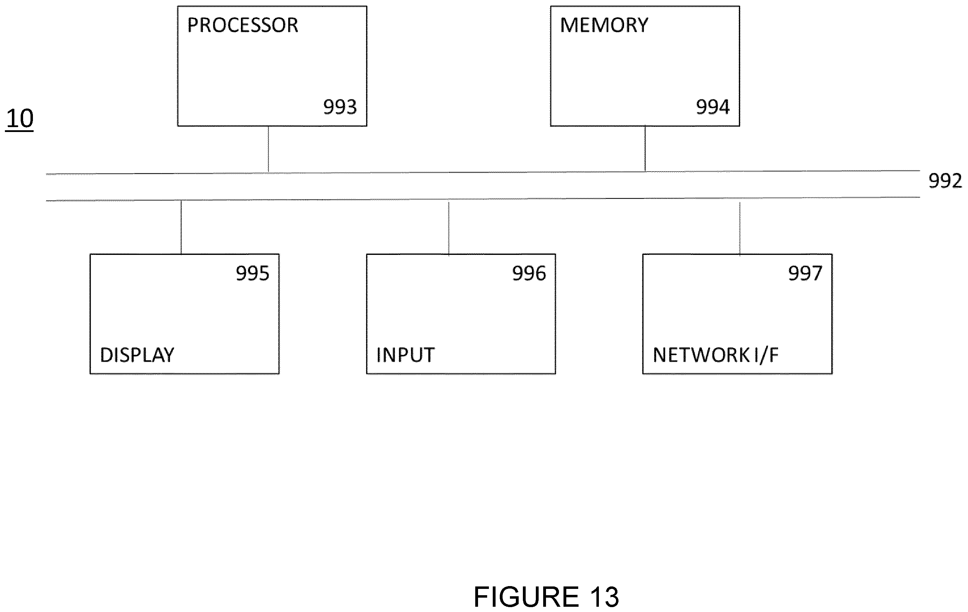

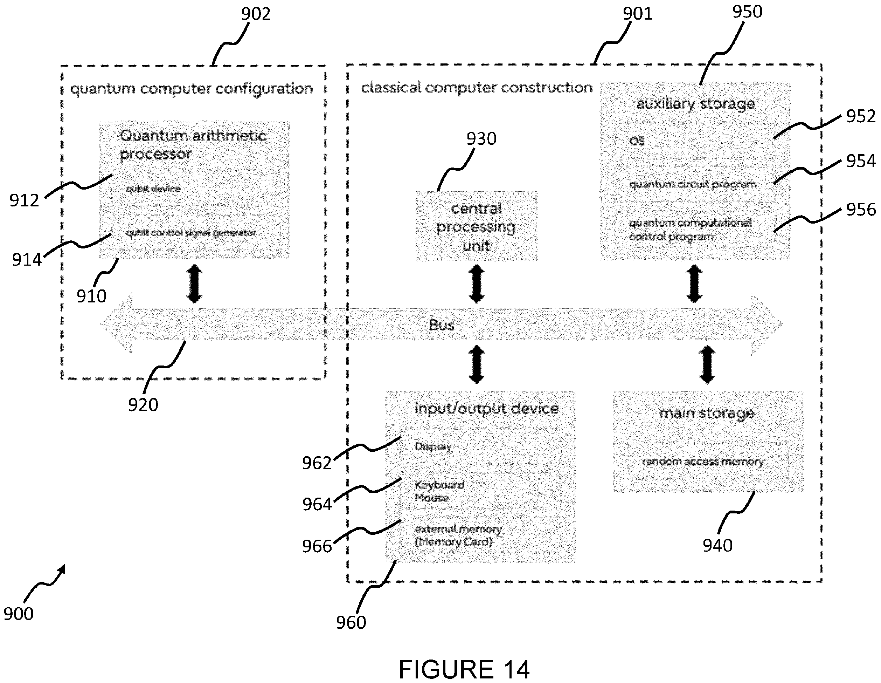

Any of the steps of **Figure 1** may be performed by an apparatus as described with reference to **Figures 13** **and** **14** below.

In particular, in a specific embodiment of step S11, the target quantum circuit may be any appropriate quantum circuit. Quantum circuits include a particular number of qubits, a particular number of wires, and a particular number of different gates to perform different functions. The target quantum circuit may have been chosen by a user in advance.

In a specific embodiment, the target quantum circuit comprises a predetermined arrangement of gates, including entanglement gates, wires and number qubits to perform a user-defined operation.

For instance, the specific form of the target quantum circuit may have been chosen to solve a particular problem, and may have been designed with a particular gate arrangement, wire arrangement and/or number of qubits based on a problem or experiment the user is trying to perform. In other words, the target quantum circuit may have been designed based on a particular problem which has been translated into qubits and quantum operations which can be executed on the target quantum circuit. The problems or experiments may take any suitable form. In particular, as will be described further below, the target quantum circuit may have been specifically designed to implement and measure a particular Hamiltonian.

Hence, in other words, it may be that the method begins from a particular target quantum circuit arrangement. This target quantum circuit is to be cut for any appropriate reason. For instance, the user may have an associated backend system which is not sufficiently powerful to perform the operation architecture defined by the target quantum circuit, or may not have as many qubits as required by the target quantum circuit. Alternatively, the user may simply desire the target quantum circuit to be split up for other reasons. Hence the original target quantum circuit is selected for gate cutting, and the output of the method will be a set of output subcircuits which can then be executed to replicate the functionality of the original target quantum circuit.

In particular, in a specific embodiment of step S13, the subcircuit constraint - defining the maximum number of qubits available per output subcircuit of the set of output subcircuits - is a variable that may be user defined. For instance, the user may set this variable based on any appropriate consideration, such as how efficient they want the operation of the set of output subcircuits to be, or an arbitrary number based on the user's past experience of performing operations on a particular piece of associated backend system hardware, such as a particular quantum device or classical quantum simulator. For instance, the user may have a particular backend system available upon which to perform operations, and the user may set the subcircuit constraint variable as any number less than or equal to the maximum number of qubits available in a backend system comprising a quantum device or a quantum simulator, but more than or equal to two qubits. Hence, in other words, the subcircuit constraint may be considered to equate to a restriction associated with a particular backend quantum system.

In particular, in a specific embodiment of step S13, the subcircuit constraint - defining the maximum number of qubits available per output subcircuit of the set of output subcircuits - may be determined based on a maximum number of qubits available in a backend system comprising a quantum device or a quantum simulator.

Hence aspects and embodiment advantageously are able to automatically generate viable processing solutions for target quantum circuits which have more qubits than an available hardware resource - be that quantum or classical - and can thereby automatically tailor the processing to the specific backend hardware available.

Accordingly, having performed steps S11 and S13, the method has now received - for instance as user defined inputs - a particular target quantum circuit arrangement to be cut, and a particular constraint on the number of qubits to be allowed per subcircuit created by the automatic gate cutting method. Based on this information, aspects and embodiments may advantageously be able to automatically determine particular gate cutting operations to be performed on particular gates of the target quantum circuit such that a set of output subcircuits can be determined which are capable of replicating the total operational functionality of the original target quantum subcircuit, but advantageously do so using fewer required qubits than the original target quantum subcircuit.

In particular, in a specific embodiment of step S15, a cutting algorithm is implemented to automatically determine a set of optimum subcircuits in which to cut the original target quantum circuit into. In a specific embodiment, step S15 may serve to identify a set of optimum subcircuits which minimise the number of cuts required to be performed on the target quantum circuit. In particular, as will be explained further below, minimising the number of cuts required is advantageous as the number of additional operations required to be performed - referred to later as experiments - on the subcircuits to approximate the original target quantum circuit may grow exponentially with the number of cuts performed. Hence for increased computational efficiency and reduced resource requirements, minimising the number of cuts required to the gates of the target quantum circuit is advantageous.

In a specific embodiment of step S15, the cutting algorithm includes a cost function which assists in identifying the optimum cuts to be performed to determine the optimum subcircuits, for instance those with the minimum number of cuts required. The cutting algorithm is designed to take as input the target quantum circuit and to output potential candidate sets of subcircuits which the target quantum circuit could be split into using gate cutting. Each iteration of the cutting algorithm outputs candidate subcircuits based on an assessment of the gates of the target quantum circuit, for instance by assessing the presence or otherwise of entanglement gates, for instance between respective pairs of qubits in the target quantum circuit. For each candidate subcircuit, the subset of entanglement gates which need to be cut to achieve the candidate subcircuit is determined and stored, for potential use later in performing the gate cutting. For each candidate subcircuit created, an assessment is made of whether the subcircuit constraint is satisfied - in other words whether the candidate subcircuit includes a number of qubits less than or equal to the maximum number of qubits defined in the subcircuit constraint.

In order to perform circuit cutting, there must be at least two candidate subcircuits with at least one qubit per subcircuit. The gates to be cut may be any gates, but are particularly focused on entanglement gates, and for instance 2-qubit gates in which the control and target qubits are located in separate subcircuits.

The cost function may take any appropriate form. The cost function is evaluated iteratively, to output a plurality of different answers and configurations for the candidate subcircuits. The cutting algorithm seeks to minimise the cost function to determine the set of optimum subcircuits, wherein the set of candidate subcircuits for which the cost function is minimised is chosen and determined to be the set of optimum subcircuits. Accordingly, an optimum set of subcircuits may be considered to be a or any set of candidate subcircuits for which the subcircuit constraint is satisfied. Further, minimising the cost function may comprise at least determining whether the subcircuit constraint is satisfied.

In a specific embodiment, the cost function is minimised for the candidate set of subcircuits for which both: the subcircuit constraint is satisfied, and the number of entanglement gates of the target quantum circuit to be cut in the respective subset of the entanglement dates is a minimum.

Minimising the number of cuts in accordance with aspects and embodiments herein is advantageously beneficial to improve the processing speed and efficiency - first in reducing the number of cuts that need to be performed, and second in reducing the calculations required downstream when expectation values are being calculated.

Optimising, in other words minimising, the cost function may be performed using any appropriate optimisation method. In a specific embodiment, the cutting algorithm further comprises using an evolutionary algorithm for minimising the cost function.

As would be understood by the skilled person, in evolutionary algorithms each iteration of the algorithm provides several solutions. These solutions may be evaluated according to the cost function, wherein at each stage the top solutions survive and help to generate to following solutions in subsequent iterations. Accordingly, in a specific embodiment only candidate subcircuits that satisfy a predetermined criteria 'survive' to be included in the next stage of subsequent iterations.

In a further specific embodiment, the evolutionary algorithm may take the form of an Estimation of Distribution Algorithm (EDA), and for instance may specifically take the form of EDAspy (https://github.com/VicentePerezSoloviev/EDAspy?tab=readme-ov-file). Using evolutionary algorithms is an advantageously efficient manner of optimizing and reducing the cost function.

In a specific embodiment, the cost function may take the form of a binary optimisation problem. In particular, the connectivity between respective qubits in the target quantum circuit may be represented as binary variables, where *xᵢⱼ* = 0 and *xᵢⱼ =* 1 respectively denote that there do not exist and there do exist entanglement gates between qubits *i* and *j*. The minimization of the cost function may then be represented as:
min *f*(*x*) such that, $f \left(x\right) = \left\{\begin{matrix}if isvalid \left(x\right) : {\sum }_{i , j}^{i > j} {x}_{ij} {w}_{ij} \\ else : δ\end{matrix}\right. ,$ where *xᵢⱼ* ∈ {0,1}; *wᵢⱼ* denotes the number of entanglement gates present between qubits *i* and *j; isvalid*(*x*) returns True if the solutions generates the subcircuits according to the maximum qubits size provided by the user, and False otherwise; and *δ* is a penalization term.

The minimization may be performed using any evolutionary algorithm as previously described, wherein in the first iteration a random candidate set of subcircuits is first defined. The evolutionary algorithm may then weight the solutions, determining sets of subcircuits it considers promising - those which minimize the cost function, i.e. using the penalization term - learning from these and performing the second and subsequent iterations based on the promising solutions until convergence on the minimum of the cost function is reached. As the skilled person would appreciate, any application evolutionary algorithm would be suitable and may be used.

Accordingly, using the cost function and minimising it as described will over a series of iterations produce a candidate set of subcircuits for which the subcircuit constraint is satisfied, and optionally wherein the number of gate cuts and/or subcircuits generated is a minimum. This candidate set of subcircuits, for which the cost function is minimised may be considered the set of optimum subcircuits, for instance given the particular target quantum circuit and the particular subcircuit constraint.

In a specific embodiment of step S17, the gates that need to be cut to achieve the optimum set of subcircuits are then cut, wherein these are in particular entanglement gates connecting qubits in different subcircuits in the set of candidate subcircuits, i.e. entanglement gates crossing subcircuits.

Hence, in accordance with any aspect or embodiment as described, there is advantageously provided a method of automatically determining and performing gate cutting of a particular target quantum circuit. Further, the automatic determination and gate cutting may be in a manner that is tailored to allowing the quantum operations of the original target quantum circuit to be executed on a particular available quantum hardware having only a limited number of qubits. Further still, the automatic determination and gate cutting may be in a manner that determines the minimum number of gate cuts required, and/or the minimum number of subcircuits created, thereby improving efficiency and speed of performance.

Hence, in accordance with any aspect or embodiment as described, given an original target quantum circuit, the automatic method may find the optimal cuts to be performed in order to minimize the number of cuts to be carried on while satisfying the quantum device restrictions.

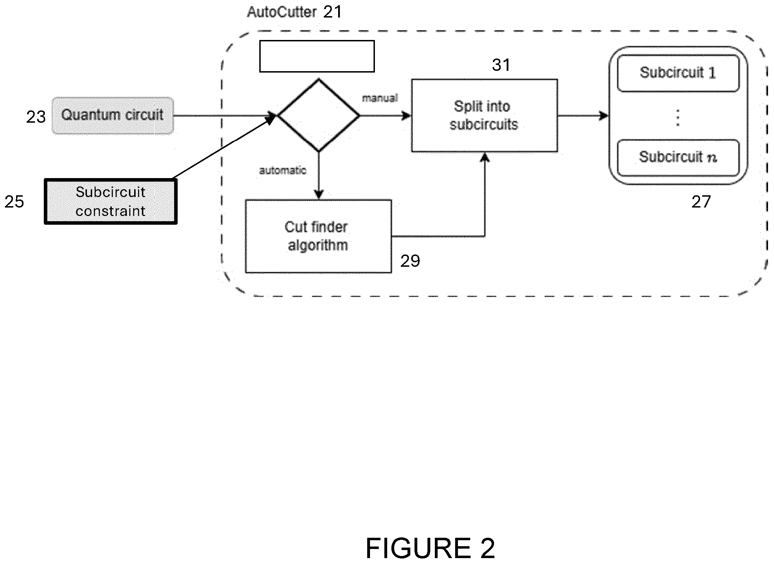

**Figure 2** is a diagram illustrating an example process according to an embodiment, where the process is a specific embodiment in accordance with the process 100 of **Figure 1****.**

In particular, **Figure 2** demonstrates a particular visualisation of a specific embodiment of the method 100 as being incorporated into an 'autocutter' module 21. In particular, in accordance with step S11 in any manner as previously described, a target quantum circuit 23 comprising a number of qubits and entanglement gates is identified and selected as input into the autocutter module 21. In accordance with step S13 in any manner as previously described, a subcircuit constraint 25 defining the maximum number of qubits available per output subcircuit of the set of output subcircuits is identified and selected as input.

In an optional step, the autocutter module 21 may also allow for a manual cutting mode, in which the user can directly select and perform particular gate cuts on the target quantum circuit 23 to achieve the set of output subcircuits 27. In the manual operation, the user provides the number of qubits to be included in each of the subcircuits of the set of output subcircuits 27. However, this will not be described in further detail here.

In accordance with step S15 in any manner as previously described, in the automatic functionality a cutting algorithm - here labelled 'cut finder algorithm' 29 - is performed to determine the set of optimum subcircuits 27, based on the target quantum circuit 23 identified and input and the subcircuit constraint 25 identified and input. Thes steps can happen in any order.

In accordance with step S17 in any manner as previously described, following from the performance of the autocutter algorithm 29, the algorithm output the optimum set of subcircuits to be created by minimising the cost function. Hence, based on this output, each of the entanglement gates of the target quantum circuit which needs to be cut to achieve the set of optimum subcircuits is then cut, for instance in a splitting module - labelled in **Figure 2** as 'split into subcircuits' module 31 - and the set of output subcircuits is created. As can be seen, the number of subcircuits in the set of output subcircuits 27 is a variable running from 1 to 'n', where '*n*' will change in each instance depending on the target quantum circuit 23 input and the subcircuit constraint 25.

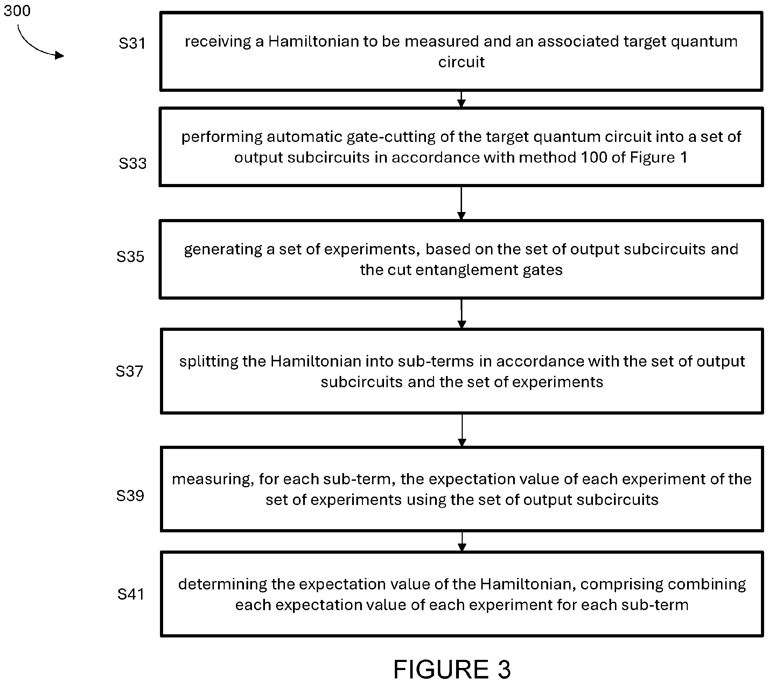

**Figure 3** is a diagram illustrating a method 300 according to an aspect. In particular, the process may be a computer-implemented method of determining an expectation value of a Hamiltonian.

Step S31 comprises receiving a Hamiltonian to be measured and an associated target quantum circuit.

Step S33 comprises performing automatic gate-cutting of the target quantum circuit into a set of output subcircuits in accordance with any previously described computer-implemented method herein, for instance process 100 comprising steps S11 to S17.

Step S35 comprises generating a set of experiments, based on the set of output subcircuits and the cut entanglement gates.

Step S37 comprises splitting the Hamiltonian into sub-terms in accordance with the set of output subcircuits and the set of experiments.

Step S39 comprises measuring, for each sub-term, the expectation value of each experiment of the set of experiments using the set of output subcircuits.

Step S41 comprises determining the expectation value of the Hamiltonian, comprising combining each expectation value of each experiment for each sub-term.

Hence advantageously aspects and embodiments may provide an end-to-end method and system that receives a general quantum circuit, a backend hardware and a Hamiltonian to be considered, and accurately returns a reconstructed expectation value of the Hamiltonian by using smaller quantum circuits generated by gate cutting the original general quantum circuit, so that the target quantum circuit experiment can be performed on the user's available hardware limitations.

In particular, in a specific embodiment of step S31, the target quantum circuit is configured to prepare a quantum state to measure the expectation value of the Hamiltonian to be measured.

For instance, the Hamiltonian may take any suitable form and may have any number of terms. The Hamiltonian may be selected to relate to a particular quantum problem, system or experiment a user wants to perform or solve. Accordingly, the target quantum circuit may have a specific arrangement of gates and qubits designed to measure the particular Hamiltonian and output measured values, such as expectation values.

In a specific embodiment of step S35, the generating the set of experiments is performed in any suitable manner, for instance wherein any previous cut two-qubit gates in the target quantum circuit 23 which are cut are then expressed in a decomposed single qubit form which allows efficient separate execution on separate sub-circuits and then efficient reconstruction subsequently.

Accordingly, in a specific embodiment the set of output sub-circuits 27 are processed and a set of experiments is generated for and to account for each of the previously cut entanglement gates.
In a specific embodiment of step S35, the generating the set of experiments is performed using Cartan KAK decomposition (for instance as described in 'Hakkaku, Shigeo, Kosuke Mitarai, and Keisuke Fujii. "Sampling-based quasi-probability simulation for fault-tolerant quantum error correction on the surface codes under coherent noise." Physical Review Research 3.4 (2021): 043130.'). Cartan KAK decomposition is a methodology that allows for imitating the performance of a 2-qubit gate by combining the results of several experiments and coefficients.

In a specific embodiment, each of the cut entanglement gates is processed independently.

It is noted that the number of experiments (m) may grow more than linearly - for instance exponentially - with the number of cut entanglement gates. Hence, the number of experiments is higher than the number of subcircuits (m>n). In a specific embodiment, each cut entanglement gate generates six different experiments. Thus, the number of experiments (*m*) grows exponentially with the number of cuts (*n_{cuts}*): $m = {6}^{{n}_{cuts}} .$

Hence, as previously described, aspects and embodiments advantageously find the minimum number of entanglement gates which need to be cut and the associated minimum number of subcircuits in the set of output subcircuits, as this reduces processing time and resources required, and improves efficiency.

in a specific embodiment of step S37, the Hamiltonian is split into sub-terms in accordance with the set of output subcircuits This may be done in any conventional manner, such that the sub-terms of the Hamiltonian match and are able to be executed by the set of output subcircuits 27, where the computation of the original Hamiltonian is now distributed across the set of output subcircuits. For instance, the observables of the Hamiltonian may be split using Pauli-weighted terms, and then assigning the Hamiltonian sub-terms created to specific ones of the set of output subcircuits. Hence in this step the Hamiltonian the user wants to solve is split into sub-terms which match and are able to be executed by the set of output subcircuits determined by the cutting algorithm such as autocutter algorithm 21.

In a specific embodiment of step S39, the measuring, for each sub-term, the expectation value of each experiment of the set of experiments is performed using the backend as previously referred to which is used to define the subcircuit constraint. In particular, it was previously outlined that the subcircuit constraint could be defined based on the maximum number of qubits available in a backend system comprising a quantum device or a quantum simulator. Accordingly, in a specific embodiment the actual performance of the measuring of the expectation value is performed using the backend hardware which was previously unable to execute the target quantum circuit 23 due to having too few qubits.

As would be understood, measuring the expectation value requires multiple 'shots' or measurements to be performed, and hence measurements of the experiments may be performed iteratively any appropriate plurality of times to achieve sufficiently accurate expectation values.

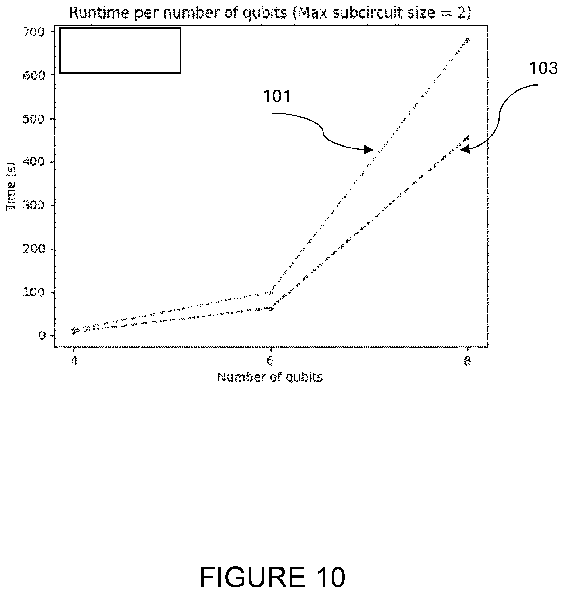

In a specific embodiment of step S39, the measuring, for each sub-term, the expectation value of each experiment of the set of experiments is parallelized such that each of the experiments/subcircuits is executed in parallel. Accordingly, the efficiency of this computation is advantageously increased and the runtime is decreased. Experimental results demonstrating this advantage are described below. **Figure 10** shows test results relating to the advantages of parallelization in accordance with any aspect and embodiment as described.

For instance, using the relationship above, in a specific example involving two cuts, this would result in thirty-six experiments, where each of the thirty six experiments can be run in parallel without waiting for any other experiment to be completed before starting the next.

Accordingly, the expectation value of the Hamiltonian in each of the experiments is measured, for instance in the backend provided by the user. Hence The expectation value in each experiment for each of the sub-terms is computed. In a specific embodiment, each experiment is executed independently and the results are stored, for instance in memory, and are subsequently processed afterwards such as in step S41.

In a specific embodiment of step S41, determining the expectation value of the Hamiltonian, comprising combining each expectation value of each experiment for each sub-term, includes combining each of the expectation values previously determined and reconstructing the final expectation value of the Hamiltonian. This is done in any conventional manner.

Accordingly, in any manner as previously described, aspects and embodiments advantageously provide a manner of receiving a target quantum circuit, receiving a Hamiltonian to be measured, and receiving a subcircuit constraint defining a maximum number of qubits. Based on this the system is capable of automatically determining the optimum - such as minimum - number of subcircuits required to perform the functionality of the original target quantum circuit, to automatically generate experiments to perform on the subcircuits to achieve the original functionality, to automatically split the Hamiltonian into sub-terms to be processed by the subcircuits, and to then perform the experiments determining the expectation value of each sub-term, and then combine the respective results from the set of experiments to reconstruct the final result of the expectation value for the Hamiltonian. Hence, in other words, aspects and embodiments are capable of automatically determining how to perform the functionality of a particular target quantum circuit on a hardware system which includes a particular number - i.e. fewer - qubits than the target quantum circuit, and to further automatically perform the experiments and provide the functionality.

Hence aspects and embodiments advantageously provide an automatic method for converting a quantum measurement the user wishes to perform on a system - expressed in the form of a target quantum circuit and an associated Hamiltonian -into a format which can be solved using the hardware the user actually has available, and then further automatically performing the experiment on the available hardware and returning an expectation value of measurement.

According to aspects and embodiments, it is advantageously decided to measure the expectation value rather than the full state vector, thereby advantageously requiring less time and fewer calculations/operations and resources.

Alternatively, according to aspects and embodiments, it is also possible to measure the full state vector if desired.

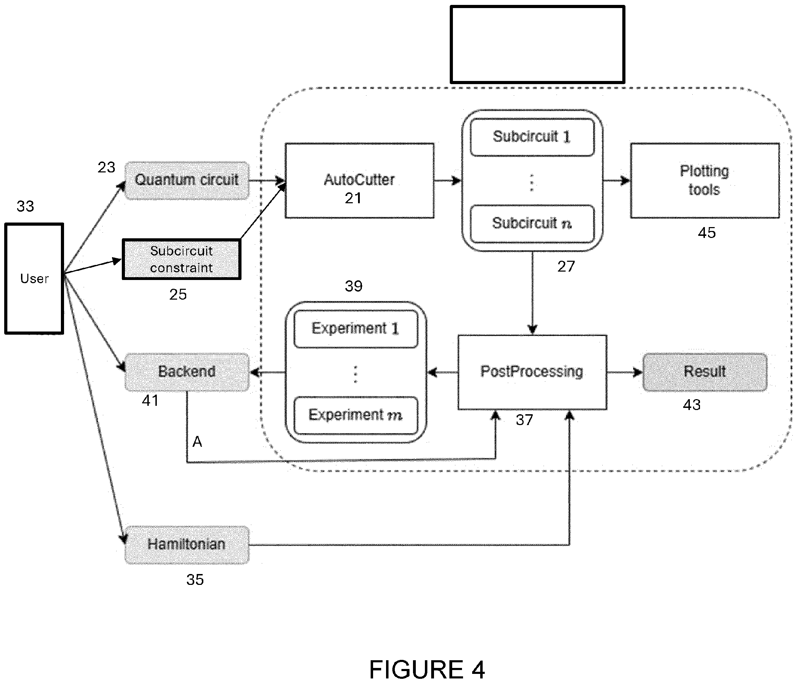

**Figure 4** is a diagram illustrating an example process according to an embodiment, where the process is a specific embodiment in accordance with the process 300 of **Figure 3****.**

In particular, **Figure 4** demonstrates a particular visualisation of a specific embodiment of the method 300 as being incorporated into a framework process.

In particular, in accordance with step S11 in any manner as previously described, and in accordance with step S31 in any manner as previously described, a target quantum circuit 23 and a subcircuit constraint 25 may be input by a user 33.

In accordance with steps S13 to S17 in any manner as previously described, the cutting algorithm - for instance as embodied by autocutter 21 - outputs a set of output subcircuits 27.

In accordance with step S31, a Hamiltonian 35 may be input by a user 33.

Steps S35, S37, and S41 may be performed by a so-called 'Post Processing' module 37. In particular, in accordance with step S37 as previously described, the Hamiltonian may be split into sub-terms in accordance with the set of output subcircuits 27 which are received as input into the post processing module 37. Further, in particular, in accordance with step S35 as previously described, a set of experiments 39 are generated based on the set of output subcircuits 27 and the cut entanglement gates.

In accordance with step S39 in any manner as previously described, measurement is performed, for each sub-term, of the expectation value of each experiment of the set of experiments 39 using the set of output subcircuits 27. As previously noted, in a specific embodiment these are performed on the backend hardware 41. As previously noted, in a specific embodiment the experiments are executed independently and may be performed using parallelization. The expectation values measured are output - indicated by arrow A in **Figure 4** - back to the post processing module 37.

In accordance with step S41 in any manner as previously described, the expectations values from each of the experiments for each sub-term are processed and combined to reconstruct the final expectation value of the original Hamiltonian. This expectation value may be output as the final result 43 as shown in **Figure 4****.**

Hence, in specific embodiments, it may be considered that the post processing module 37 advantageously allows for the generation of a set of experiments from the given subcircuits 37 and associated cuts of the entanglement gates, and wherein the combination of the respective expectation value results from the set of experiments, together with the given Hamiltonian allows the reconstruction of the final result of the original Hamiltonian.

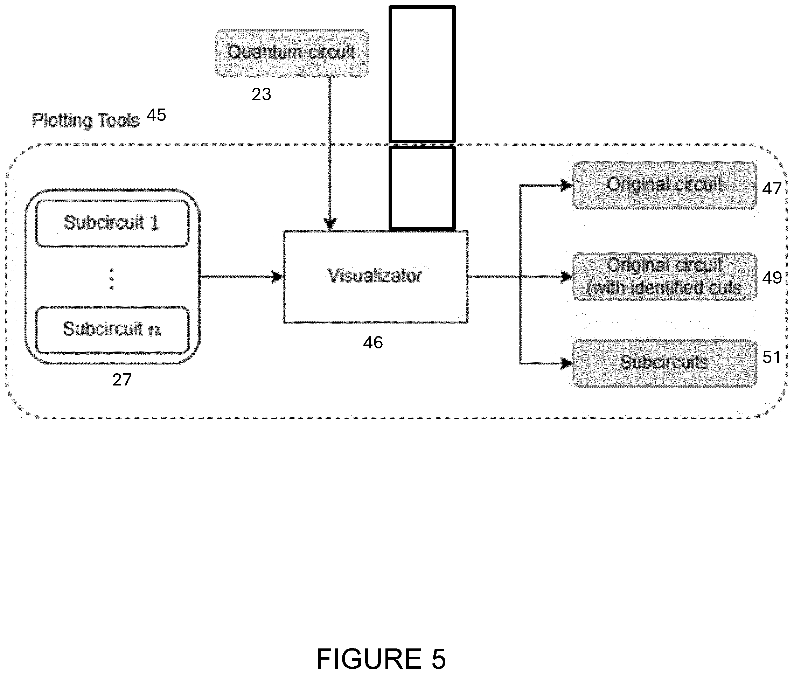

Optionally, as depicted in **Figure 4****,** the method framework 300 may include a plotting tool 45. A specific embodiment of a visualization of the plotting tool 45 is depicted **Figure 5****.** The plotting tool 45 may take as input the target quantum circuit 23 and the set of output subcircuits 27. The plotting tool 45 may be a piece of software capable of being used by the user on a conventional computer display screen, wherein the plotting tool45 uses a visualization programme 46 to graphically visualize the target quantum circuit 47, to the original target quantum circuit 23 in which the entanglement gate cuts to be performed are identified 49, and separately visualize the resultant set of output subcircuits 51 after the gate cuts are performed.

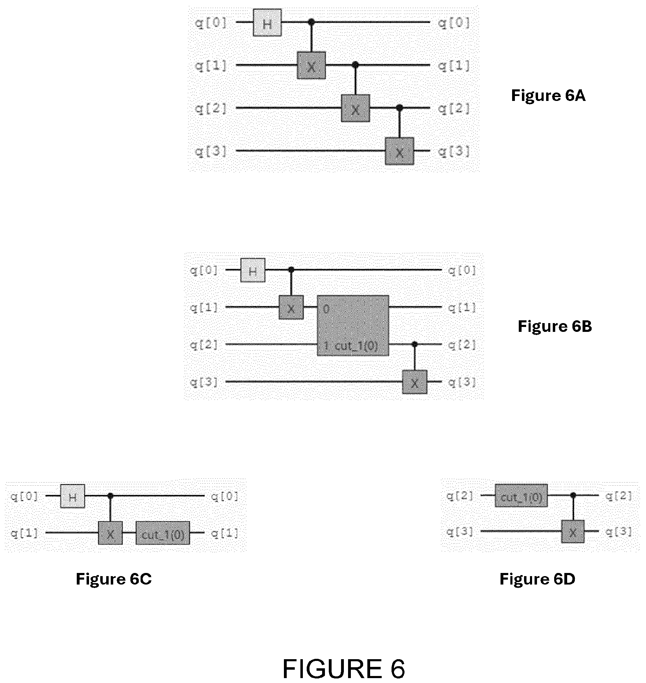

In a specific embodiment, the plotting tool 45 may use the rendering options from Pytket (a python module for interfacing with TKET, developed by Quantinuum: https://docs.quantum.com/tket/user-guide/manual/manual_intro.html) to perform the visualization. Examples of the output of the visualization will be provided in **Figure 6** below and described with reference to that figure therein.

A specific embodiment showing a worked example of method 100 being performed on a toy quantum circuit and a simple Hamiltonian is provided with reference to **Figure 6A** to **6D**. The worked example is performed in accordance with any steps as previously described.

In particular, **Figure 6A** shows the original target quantum circuit 23 to be used. The visual representation includes the qubits '*q[x]*', wires, a Hadamard gate '*H*', and entanglement gates 'X', which are depicted in a conventional manner as would be understood by the skilled person.

The original target quantum circuit 23 chosen is a GHZ (Greenberger-Horne-Zeilinger) circuit - a maximally entangled state of multiple qubits - acting on four qubits. Hence **Figure 6A** is an example of the visualization 47 of the original target circuit as might be provided by the plotting tool 45 as previously described.

The associated Hamiltonian (H) in the present example is a Fermi-Hubbard model: $H = - T {\sum }_{\left〈i, j\right〉 , σ} \left({a}_{iσ}^{†}{a}_{jσ}+{a}_{jσ}^{†}{a}_{iσ}\right) + U {\sum }_{i} {n}_{i ↑} {n}_{i ↓}$ wherein:
- T and U are the hopping matrix element and the on-site interaction respectively
- ${a}_{iσ}^{†}$ creates a fermion at site *i* with spin σ
- *a_{jσ}* annihilates a fermion at site *j* with spin σ
- *nᵢ*↑*nᵢ*↓ counts the fermions at site / with different spin (↑ or ↓)

In the present example, the subcircuit constraint 25 must be 3 or less, such that the target quantum circuit 23 having four qubits does not meet the subcircuit constraint 23 and hence needs to be split into subcircuits.

In accordance with step S15 in any manner as previously described, once the set of output subcircuits 27 have been determined, this may be visualized as shown in **Figure 6B**. In particular, as depicted in **Figure 6B**, the gates to be cut are visualized by replacing the respective gate with a box spanning both wires of the gate to be cut. In particular, a custom gate is created to represent the cut to be performed where each cut *i* is represented as a box under the name *cut_i,* where for instance with entanglement gates the control and target qubits remain as they were in the original gate to be cut. In the present worked example, as shown the first subcircuit includes qubits "q[0]" and "q[1]", while second subcircuit includes qubits "q[2]" and "q[3]", respectively.

Hence this is a visualization of the gate cutting that needs to be performed in accordance with step S17 in any manner as previously described to achieve the desired set of output subcircuits 27 which have been optimised and minimised by the method 100.

Hence **Figure 6B** is an example of the visualization 49 of the original target quantum circuit 23 in which the entanglement gate cuts to be performed are identified.

In accordance with step S17 in any manner as previously described, the actual set of output subcircuits 27 once the gate cutting has been performed are visualized in **Figures 6C** and **6D**. As can be seen, the box spanning two wires has now been split and is depicted as a single-qubit box present now in both subcircuits in the same position and under the same name 'cut_1(0)' to show the association.

Hence **Figures 6C and 6D** are examples of the visualization 51 of the resultant set of output subcircuits 51 after the identified gate cuts are performed.

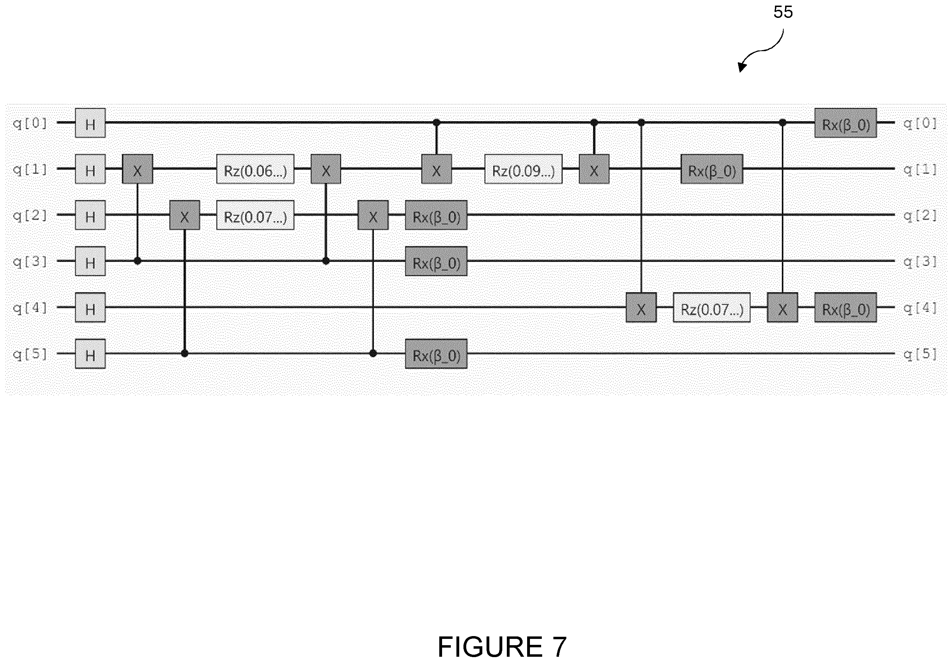

A specific embodiment describing a worked example of method 100 being performed will now be provided, with reference to an associated depiction in **Figure 7****.** The worked example is performed in accordance with any steps as previously described.

In particular, the example involves a user wishing to solve a particular quantum problem. In particular, an optimisation problem is identified in the form of a Quantum Approximate Optimisation Algorithm (QAOA). The QAOA is a hybrid quantum-classical algorithm designed to solve **combinatorial optimization problems,** such as **Max-Cut, Traveling Salesman, and Scheduling Problems.** In broad outline, it works by encoding the problem into a quantum circuit, running parameterized quantum operations, and using classical optimization to improve results iteratively. Hence the goal is broadly to maximize or minimize an objective function over a discrete set of possible solutions. It is typically used for graph cutting.

In the present example, by way of representative example, a graph exists in which nodes represent a variable of interest- such as assets in a stock market - while edges between them represent some form of connection - such a correlation between the variance in the assets. Accordingly, in this graph two assets which are highly correlated are likely to either drop or raise their value at the same time (positive correlation) or raise the value when the other one is dropping (negative correlation). QAOA may be used here to find the optimal graph cuts, such that for instance those assets which are correlated can be placed within the same portfolio. Alternatively those assets which are uncorrelated can be placed within the same portfolio in order to improve the portfolio diversification and reduce the risk of investment. Hence, the output of this problem is a solution in which two different portfolios are proposed aiming to maximize the diversification in them. However, as will be appreciated, this is merely a representative example problem and context.

Based on this problem, the QAOA leads to an initialized target quantum circuit 55 as depicted in **Figure 7****.** As can be seen, the target quantum circuit 55 is complicated with a superposition state among all the possible quantum states. Hence an H gate is applied to every qubit. In a first step under the QAOA algorithm, each of the nodes in the graph is represented as a qubit in the target quantum circuit 55, and each of the edges between them as a combination of the following gates:
(i) CNOT gate with control qubit "q[i]" and target qubit "q[j]"
(ii) (ii) RZ gate parameterized by gamma on qubit "q[j]", and
(iii) (iii) CNOT gate with control qubit "q[i]" and target qubit "q[j]".

In a second step under the QAOA algorithm, once the edges are represented, a Rx gate parameterized by beta is added to each of the qubits. The first and second steps are repeated as many times as number of layers the user defines, where each layer is parameterized by two different parameters. The result of this is the target quantum circuit 55 as depicted in **Figure 7****,** as can be seen.

Advantageously, aspects and embodiments as described herein such as methods 100 and 300 can be used to solve more complicated problems such as the one described with reference to **Figure 7****,** wherein optimising the parameters of big target quantum circuits is possible. Hence aspects and embodiments advantageously allow for larger problems to be solved than is currently possible in conventional qubit limited hardware system.

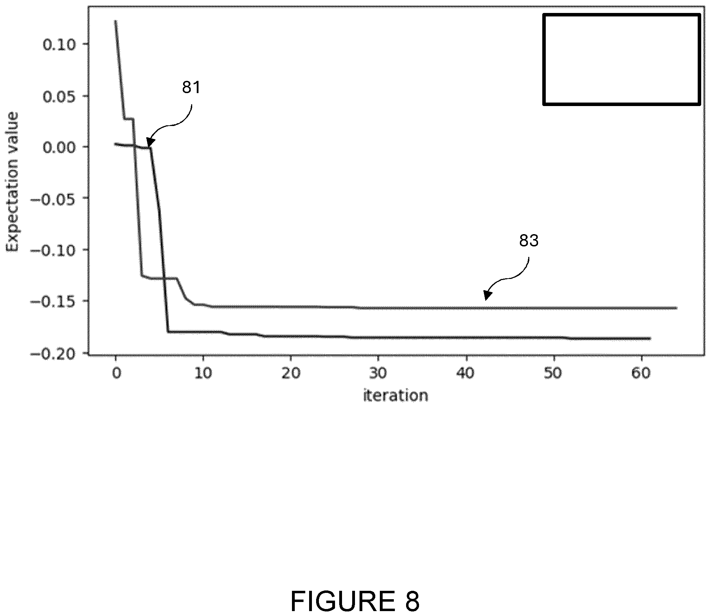

In particular, to demonstrate this advantageous functionality, processes in accordance with methods 100 and 300 as previously described were conducted on the example described with reference to **Figure 7****,** and the results are provided herein in **Figure 8****.** In **Figure 8****,** the subcircuit constraint 25 is taken to be five qubits, and as can be seen the target quantum circuit 55 of **Figure 7** has six qubits.

The visualization of the splitting of the target quantum circuit 55 is not shown here. In particular, **Figure 8** shows a comparison of the optimization procedure for one independent run in the state of the art IBM's Qiskit Toolbox 83 as compared to as performed by aspects and embodiments in accordance with methods 100 and 300 which shall be referred to as 'QuantCut' 81. In this example the COBYQA optimizer (https://docs.scipy.org/doc/scipy/reference/optimize.minimize-cobyqa.html) was used for the optimization procedure in both cases under the same conditions (start point, tolerance, and maximum number of iterations). In both simulations, each circuit was sampled 10⁵ times. In this case, QuantCut 81 was more than five times faster than Qiskit Toolbox 83.

Specifically, **Figure 8** shows a convergence plot for the expectation value minimization after a few iterations of the QAOA approach as described in relation to **Figure 7** using the automatic gate cutting methods in accordance with aspects and embodiments of methods 100 and 300. It is noted that, due to sampling noise, the outcome is not completely deterministic. Hence, we provide below in Table 1 mean and standard deviation metrics after running the algorithms five independent times. The differences in mean expectation values between QuantCut 81 and Qiskit Toolbox 83 were not statistically significant. However, QuantCut 81 advantageously took 3 min 19 seconds in run the examples, while Qiskit 83 took significantly longer at 9 min 48 seconds.

**Table 1**

| | QuantCut 81 | Qiskit Toolbox 83 |
|---|---|---|
| Average expectation value | -0.13 | -0.15 |
| Standard deviation | 0.05 | 0.03 |
| Total time to be run 5 times | 3'19" | 9'48" |

Hence as can be seen aspects and embodiments in accordance as described herein in accordance with methods 100 and 300 as previously described are significantly faster in providing a minimised stable expectation value as compared to state of the art methods.

to demonstrate the advantageous functionality of processes in accordance with methods 100 and 300 as previously described were conducted on the example described with reference to **Figure 7****,** and the results are provided herein in **Figure 8****.** In **Figure 8****,** the subcircuit constraint 25 is taken to be five qubits, and as can be seen the target quantum circuit 55 of **Figure 7** has six qubits.

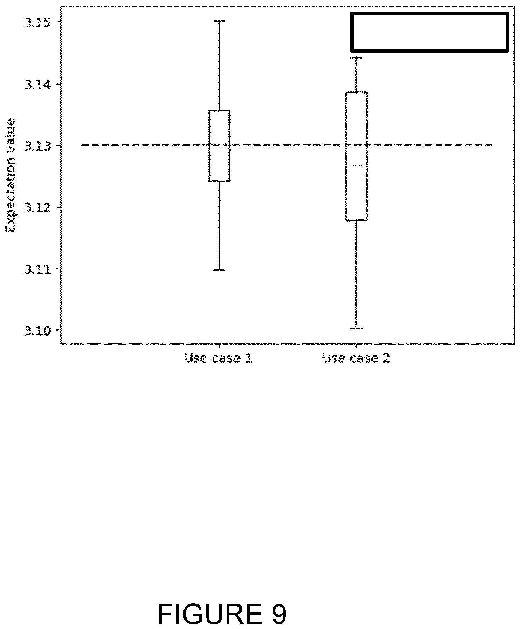

**Figure 9** represents a further example of experimental evidence of advantageous functionality provided by aspects and embodiments in accordance with methods 100 and 300 in any manner as previously described.

In particular processes in accordance with methods 100 and 300 as previously described were conducted on the example described with reference to **Figure 6****,** and the results are provided herein in **Figure 9****.**

Specifically **Figure 9** shows boxplot comparisons of the expectation values determined when executing the original target quantum circuit 25 of **Figure 6A** - labelled as 'use case 1' - as compared to expectation values determined when executing the set of output subcircuits 27 as shown in the combination of **Figures 6C** and **6D** which were derived by implementing processes in accordance with method 100 as previously described - labelled 'use case 2'. The dashed line represents the real expectation value when no circuit cutting is performed, i.e. when the original target quantum circuit 23 is executed in use case 1.

Hence, in this example, to compare accuracy and efficacy of the final expectation value result reconstruction as determined by methods in accordance with 100 and 300 as previously described, the expectation value of the given Hamiltonian described with reference to **Figure 6** was first computed for the entire original target quantum circuit 23, where no circuit cutting is performed, and second on the set of output subcircuits 27 as depicted in **Figures 6C and** 6D for which gate circuit was performed in manner as previously described.

The measurements were conducted on a shot-based backend hardware. As such, as shot-based computations are random measurements, the computations for the expectation value were performed several times to provide a statistical comparison of the mean and standard deviation values.

As can be seen in **Figure 9****,** the boxplot comparison shows the mean and variance values represented for each of the two described uses cases. This is performed for after 20 independent executions. As can be seen, use case 2 in accordance with aspects and embodiments as described herein in accordance with methods 100 and 30 are advantageously able to reconstruct the real expectation value result accurately with very small variance.

**Figure 10** is a graph of test results. In particular, **Figure 10** represents a runtime comparison between parallel execution 103 of every experiment generated in accordance with any aspect and embodiment as described herein, for instance in accordance with step S39 as previously described, and of sequential execution 101 of every experiment generated in accordance with any aspect and embodiment as described herein, for instance in accordance with step S39 as previously described.

In particular, **Figure 10** shows the runtime when using the parallelization as a function of the number of cuts performed for a particular target quantum circuit, wherein the runtime per number of qubits of the target quantum circuit is shown with a maximum number of two qubits per subcircuit created by the cuts. Accordingly, the graph shows runtime as a function of system size of the target quantum circuit, wherein the number of cuts for each quantum circuit is number cuts=(number qubits/2)-1. As can be seen, the reduced runtime advantages of parallelization are clear and increase with number of qubits.

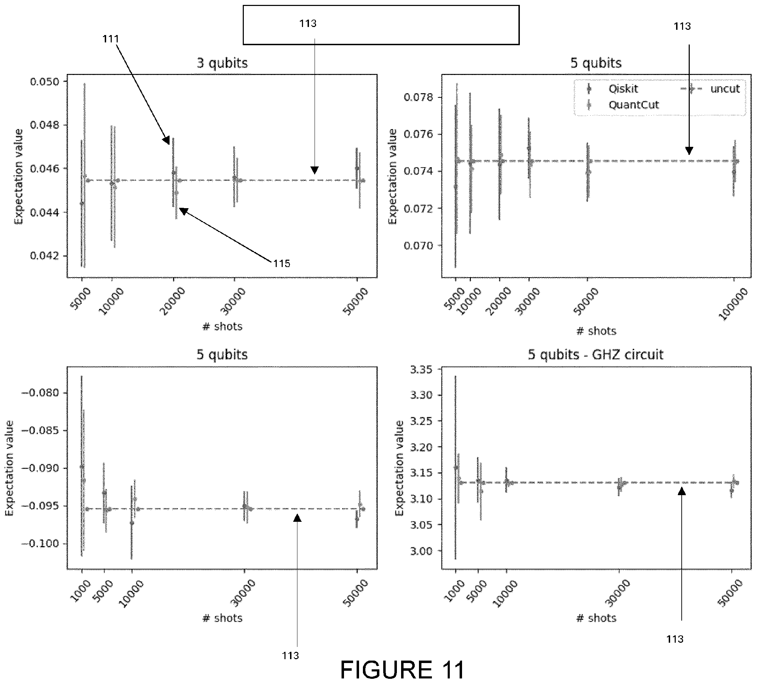

**Figure 11** shows a series of graphs for tests of different qubit sized target quantum circuits, wherein the expectation value accuracy as a function the number of shots performed in the experiment execution is shown.

Qiskit Toolbox 111 is a state of the art system as previously described with reference to **Figure 8****,** 'uncut' 113 is a simulation without circuit cutting the original target quantum circuit, and 'QuantCut' 115 methods in accordance with any aspects and embodiments described herein for instance using methods 100 and 300. For visual reference, the Qiskit Toolbox 111 is shown in blue, the 'uncut' 113 is shown in green and the 'QuantCut' 115 is shown in orange. Further, for visual reference, for each of the number of shots delineations, the Qiskit Toolbox 111 is shown on the left and the 'QuantCut' 115 is shown on the right, where for ease of visual reference and not cluttering the graphs this is specifically indicated with reference numerals and arrows only once on the 3 qubit graph, however this applies to each of the graphs.

As can be seen, fairly equal results are obtained for all the methodologies compared with no significant improvements found in terms of accuracy. Accordingly aspects and embodiments as described herein are advantageously able to well-reconstruct the expectation value with high accuracy and to reach the state of the art results. However, further advantageously, aspects and embodiments as described herein outperform other methods as the number of cuts and the number of shots increases.

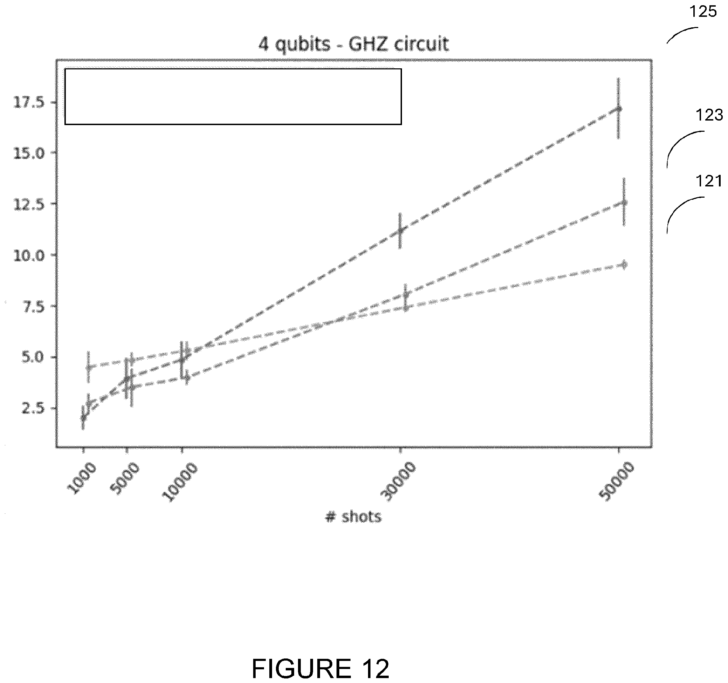

**Figure 12** shows a graph comparison of runtime as a function of the number of shots for different methodologies. 'QuantCut' methods performed in accordance with any aspects and embodiments described herein, for instance using methods 100 and 300, as shown with parallel processing as previously described 121 and without parallel processing 123. State of the art system Qiskit Toolbox 125 is compared. As can clearly be seen, 'QuantCut' methods performed in accordance with aspects and embodiments as described herein advantageously outperform the state of the art in both modalities.

Aspects and embodiments of any method as described herein may be designed to be compatible with established open-source software, and for instance may use the Pytket library (https://tket.quantinuum.com/api-docs/) with reference to the quantum circuits. For instance, using Pytket allows the use of the majority of the currently available backends and serves as a middle layer between different circuit representations and different backends. Regardless, quantum circuit implementations in other representation can be directly translated into Pytket and then processed in accordance with any method as described herein.

Aspects and embodiments as described herein may advantageously be used in any context or use case in which a desired or designed (target) quantum circuit cannot be implemented in the available or existing quantum device, whether classical hardware or quantum hardware, because the number of qubits required by the (target) quantum circuit is greater than the qubits available in the quantum device. Accordingly, aspects and embodiments advantageously allow for much bigger (target) quantum circuits to be executed without having to scale the existing or available quantum device hardware.

The broad advantages of the aspects and embodiments as described herein may be applied in a number of real-world contexts and example use cases, for instance including:
- variational quantum algorithms involving a quantum parametric circuit which is iteratively executed onto a quantum computer and its expectation value is measured.
- fault tolerance methods in which a large quantum circuit is needed to be executed in a quantum device. For example, as required in quantum phase estimation.
- quantum machine learning methods, which usually involve a large number of qubits in order to process classical data.
- use as part of quantum error correction to reduce the sizes of the quantum circuits to be run and thereby reduce the error.

According to an aspect there is provided a computer program which, when run on a hybrid quantum-classical computer, causes the computer to carry out the method of performing automatic gate-cutting of a target quantum circuit into a set of output subcircuits in accordance with any manner as described herein.

According to an aspect there is provided a computer program which, when run on a hybrid quantum-classical computer, causes the computer to carry out the method of determining an expectation value of a Hamiltonian in accordance any manner as described herein.

According to an aspect there is provided an information processing apparatus comprising a memory and a processor connected to the memory, wherein the processor is configured to perform the method of performing automatic gate-cutting of a target quantum circuit into a set of output subcircuits in accordance with any manner as described herein.

According to an aspect there is provided an information processing apparatus comprising a memory and a processor connected to the memory, wherein the processor is configured to perform the method of determining an expectation value of a Hamiltonian in accordance with any manner as described herein.

### Example Computer System implementation

**Figure 13** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 13****.** Such a computing device need not have every component illustrated in **Figure 13****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

The processor 993 may comprise at least one "classical" processor and at least one quantum computing device/processor. The at least one "classical" processor may be configured to implement methods steps and/or operations of a method/computer program, corresponding to any of the method steps described above, for instance with reference to **Figures 1** **and** **3****,** wherein when some steps/operations include "using" quantum models/agents and in those operations the "classical" processor controls the at least one quantum computing device/processor to implement the quantum agents and carry out the operations.

Rather than the processor 993 comprising at least one "classical" processor and at least one quantum computing device/processor, the processor may comprise or be the at least one "classical" processor and the computing device 10 may additionally comprise at least one quantum computing device/processor configured as described above. The at least one quantum computing device/processor may be provided separately from or inside the computing device 10 and may e.g. be connected to the computing device 10 via a bus.

**Figure 14** is a schematic diagram illustrating a hybrid quantum-classical computing device 900 comprising a classical computer construction 901 and a quantum computer configuration 902. The classical computer construction 901 comprises a central processing unit (CPU) 930, a main storage 940, an auxiliary storage 950, and input/output device(s) 960. The quantum computer configuration 902 comprises a quantum arithmetic processor (which may be referred to as a quantum processor) 910. The quantum arithmetic processor 910 may comprise a qubit device 912 and a qubit control signal generator 914. The qubit device 912 is configured to represent the physical qubits where quantum information is stored and processed, and the qubit control signal generator 914 is configured to produce the signals required to manipulate those qubits and perform the operations in the quantum arithmetic processor 910. In particular the qubit device 910 is configured to hold and manipulate quantum states, and may be implemented using various technologies, such as for instance superconducting circuits, trapped ions, or photonic systems, and the qubit control signal generator 914 is configured to manipulate the qubits of the qubit device 912 by producing control signals, such as for instance microwave pulses or laser beams etc. The computing device 900 comprises a bus 920 connecting the components described above. The auxiliary storage 950 may comprise any of an operating system (OS) 952, a quantum circuit program 954, and a quantum computational control program 956. The input/output device(s) 960 may comprise any of a display 962, a keyboard and/or mouse 964 and an external memory (memory card) 966.

The computing device 900 may be considered to correspond to the computing device 10 of **Figure 13****.** Or the classical computer construction 901 may be considered to correspond to the computing device 10 and description of the computing device 10 may apply to the classical computer construction 901 (that is, the CPU 930 may correspond to the processor 993, the main storage 940 and auxiliary storage 950 may correspond to the memory 994, the input/output device(s) 960 may correspond to the display 995 and input 996, and the classical computer construction 901 may comprise an interface corresponding to interface 997). In other words, the CPU 930 may be configured to implement methods steps and/or operations of a method/computer program, corresponding to any of the method steps described above, for instance as described with reference to **Figures 1** **and** **3****,** wherein some steps/operations include "using" quantum ML models/agents and in those operations the CPU 930 may be configured to control the quantum processor 910 and carry out the operations.

The computing devices 10 and 900 may be referred as information processing apparatuses, and may work in tandem with quantum processing performed in the quantum computer configuration 902 and with classical processing performed in the classical computer configuration 901. The classical computer configuration 901 may control and manage the operation and instruction of the system as a whole, and/or the quantum computer configuration 902 in particular.

A method embodying the present invention may be carried out by a plurality of computing devices operating in cooperation with one another, for instance a hybrid quantum-classical computer as defined above. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

### Alternative Embodiments

The embodiments described above are illustrative of, rather than limiting to, the present invention. Alternative embodiments apparent on reading the above description may nevertheless fall within the scope of the invention.

## Claims

1. A computer-implemented method of performing automatic gate-cutting of a target quantum circuit into a set of output subcircuits, comprising:
identifying a target quantum circuit comprising a number of qubits and entanglement gates;
identifying a subcircuit constraint defining the maximum number of qubits available per output subcircuit of the set of output subcircuits;
performing a cutting algorithm to determine a set of optimum subcircuits, the cutting optimisation algorithm comprising:
iteratively evaluating a cost function which determines candidate sets of subcircuits based on an assessment of the entanglement gates of the target quantum circuit, comprising determining for each candidate set of subcircuits:
whether the subcircuit constraint is satisfied; and
a subset of the entanglement gates to be cut to achieve the candidate set of subcircuits;
minimising the cost function and defining the set of optimum subcircuits as the respective candidate set of subcircuits for which the cost function is minimised; and
creating the set of output subcircuits, comprising cutting each of the entanglement gates of the respective subset of the entanglement gates to be cut to achieve the set of optimum subcircuits.

2. The computer-implemented method of claim 1, wherein the cost function is minimised for the candidate set of subcircuits for which:
the subcircuit constraint is satisfied; and
the number of entanglement gates of the target quantum circuit to be cut in the respective subset of the entanglement dates is a minimum.

3. The computer-implemented method of any preceding claim, wherein the subcircuit constraint is based on the maximum number of qubits available in a backend system comprising a quantum device or a quantum simulator.

4. The computer-implemented method of any preceding claim, wherein the cutting algorithm further comprises using an evolutionary algorithm for minimising the cost function.

5. The computer-implemented method of any preceding claim, wherein the target quantum circuit comprises a predetermined arrangement of gates, including entanglement gates, wires and number qubits to perform a user-defined operation.

6. The computer-implemented method of any preceding claim, wherein the cost function comprises: $f \left(x\right) = \left\{\begin{matrix}if isvalid \left(x\right) : {\sum }_{i , j}^{i > j} {x}_{ij} {w}_{ij} \\ else : δ\end{matrix}\right.$ wherein:
*xᵢⱼ* = 0 and *xᵢⱼ* = 1 denote respectively that there does not exist and there does exist entanglement gates between qubits *i* and *j* of the target quantum circuit, where *xᵢⱼ* ∈ {0,1};
*wᵢⱼ* denotes the number of entanglement gates of the target circuit present between qubits *i* and *j;*
*isvalid*(*x*) returns the value 'True' if the subcircuit constraint is satisfied, and 'False' otherwise; and
*δ* is a penalization term.

7. A computer-implemented method of determining an expectation value of a Hamiltonian, comprising:
receiving a Hamiltonian to be measured and an associated target quantum circuit;
performing automatic gate-cutting of the target quantum circuit into a set of output subcircuits in accordance with the computer-implemented method of any preceding claim;
generating a set of experiments, based on the set of output subcircuits and the cut entanglement gates;
splitting the Hamiltonian into sub-terms in accordance with the set of output subcircuits and the set of experiments;
measuring, for each sub-term, the expectation value of each experiment of the set of experiments using the set of output subcircuits;
determining the expectation value of the Hamiltonian, comprising combining each expectation value of each experiment for each sub-term.

8. The computer-implemented method of claim 7, wherein the target quantum circuit is configured to prepare a quantum state to measure the expectation value of the Hamiltonian to be measured.

9. The computer-implemented method of any of claims 7 to 8 when dependent on claim 3, wherein the measuring, for each sub-term, the expectation value of each experiment of the set of experiments is performed using the backend.

10. The computer-implemented method of any of claims 7 to 9, wherein the generating the set of experiments is performed using Cartan KAK decomposition.

11. The computer-implemented method of any of claims 7 to 10, wherein the measuring, for each sub-term, the expectation value of each experiment of the set of experiments is parallelised such that each of the subcircuits is executed in parallel.

12. A computer program which, when run on a hybrid quantum-classical computer, causes the computer to carry out the method of performing automatic gate-cutting of a target quantum circuit into a set of output subcircuits in accordance with any of claims 1 to 6.

13. A computer program which, when run on a hybrid quantum-classical computer, causes the computer to carry out the method of determining an expectation value of a Hamiltonian in accordance with any of claims 7 to 12.

14. An information processing apparatus comprising a memory and a processor connected to the memory, wherein the processor is configured to perform the method of performing automatic gate-cutting of a target quantum circuit into a set of output subcircuits in accordance with any of claims 1 to 6.

15. An information processing apparatus comprising a memory and a processor connected to the memory, wherein the processor is configured to perform the method of determining an expectation value of a Hamiltonian in accordance with any of claims 7 to 12.

## Amended claims

### Amended claims in accordance with Rule 137(2) EPC.

1. A computer-implemented method of performing automatic gate-cutting of a target quantum circuit into a set of output subcircuits, comprising:
identifying a target quantum circuit comprising a number of qubits and entanglement gates;
identifying a subcircuit constraint defining the maximum number of qubits available per output subcircuit of the set of output subcircuits;
performing a cutting algorithm to determine a set of optimum subcircuits, the cutting algorithm comprising:
iteratively evaluating a cost function, which takes the form of a binary optimisation problem wherein connectivity between qubits of the target quantum circuit is represented as binary variables, and which determines candidate sets of subcircuits based on an assessment of the entanglement gates of the target quantum circuit, comprising determining for each candidate set of subcircuits:
whether the subcircuit constraint is satisfied; and
a subset of the entanglement gates to be cut to achieve the candidate set of subcircuits;
minimising the cost function and defining the set of optimum subcircuits as the respective candidate set of subcircuits for which the cost function is minimised; and
creating the set of output subcircuits, comprising cutting each of the entanglement gates of the respective subset of the entanglement gates to be cut to achieve the set of optimum subcircuits.

2. The computer-implemented method of claim 1, wherein the cost function is minimised for the candidate set of subcircuits for which:
the subcircuit constraint is satisfied; and
the number of entanglement gates of the target quantum circuit to be cut in the respective subset of the entanglement dates is a minimum.

3. The computer-implemented method of any preceding claim, wherein the subcircuit constraint is based on the maximum number of qubits available in a backend system comprising a quantum device or a quantum simulator.

4. The computer-implemented method of any preceding claim, wherein the cutting algorithm further comprises using an evolutionary algorithm for minimising the cost function.

5. The computer-implemented method of any preceding claim, wherein the target quantum circuit comprises a predetermined arrangement of gates, including entanglement gates, wires and number qubits to perform a user-defined operation.

6. The computer-implemented method of any preceding claim, wherein the cost function comprises: $f \left(x\right) = \left\{\begin{matrix}if isvalid \left(x\right) : {\sum }_{i , j}^{i > j} {x}_{ij} {w}_{ij} \\ else : δ\end{matrix}\right.$ wherein:
*xᵢⱼ* = 0 and *xᵢⱼ* = 1 denote respectively that there does not exist and there does exist entanglement gates between qubits *i* and *j* of the target quantum circuit, where *xᵢⱼ* ∈ {0, 1};
*wᵢⱼ* denotes the number of entanglement gates of the target circuit present between qubits i and*j*;
*isvalid*(*x*) returns the value 'True' if the subcircuit constraint is satisfied, and 'False' otherwise; and
*δ* is a penalization term.

7. A computer-implemented method of determining an expectation value of a Hamiltonian, comprising:
receiving a Hamiltonian to be measured and an associated target quantum circuit;
performing automatic gate-cutting of the target quantum circuit into a set of output subcircuits in accordance with the computer-implemented method of any preceding claim;
generating a set of experiments, based on the set of output subcircuits and the cut entanglement gates;
splitting the Hamiltonian into sub-terms in accordance with the set of output subcircuits and the set of experiments;
measuring, for each sub-term, the expectation value of each experiment of the set of experiments using the set of output subcircuits;
determining the expectation value of the Hamiltonian, comprising combining each expectation value of each experiment for each sub-term.

8. The computer-implemented method of claim 7, wherein the target quantum circuit is configured to prepare a quantum state to measure the expectation value of the Hamiltonian to be measured.

9. The computer-implemented method of any of claims 7 to 8 when dependent on claim 3, wherein the measuring, for each sub-term, the expectation value of each experiment of the set of experiments is performed using the backend.

10. The computer-implemented method of any of claims 7 to 9, wherein the generating the set of experiments is performed using Cartan KAK decomposition.

11. The computer-implemented method of any ofclaims 7 to 10, wherein the measuring, for each sub-term, the expectation value of each experiment of the set of experiments is parallelised such that each of the subcircuits is executed in parallel.

12. A computer program which, when run on a hybrid quantum-classical computer, causes the computer to carry out the method of performing automatic gate-cutting of a target quantum circuit into a set of output subcircuits in accordance with any of claims 1 to 6.

13. A computer program which, when run on a hybrid quantum-classical computer, causes the computer to carry out the method of determining an expectation value of a Hamiltonian in accordance with any of claims 7 to 12.

14. An information processing apparatus comprising a memory and a processor connected to the memory, wherein the processor is configured to perform the method of performing automatic gate-cutting of a target quantum circuit into a set of output subcircuits in accordance with any of claims 1 to 6.

15. An information processing apparatus comprising a memory and a processor connected to the memory, wherein the processor is configured to perform the method of determining an expectation value of a Hamiltonian in accordance with any of claims 7 to 12.
